(19)

Europäisches
Patentamt
European
Patent Office
Office européen
des brevets

(11) **EP 4 099 442 A1**

(12) **EUROPEAN PATENT APPLICATION**
published in accordance with Art. 153(4) EPC

(43) Date of publication:
    **07.12.2022 Bulletin 2022/49**

(21) Application number: **20916803.8**

(22) Date of filing: **30.01.2020**

(51) International Patent Classification (IPC):
    ***H01M 4/36*** (2006.01)      ***H01M 4/587*** (2010.01)
    ***H01M 10/052*** (2010.01)

(52) Cooperative Patent Classification (CPC):
    **H01M 4/36; H01M 4/587; H01M 10/052;**
    Y02E 60/10

(86) International application number:
    **PCT/JP2020/003463**

(87) International publication number:
    **WO 2021/152778 (05.08.2021 Gazette 2021/31)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **Showa Denko Materials Co., Ltd.
    Tokyo 100-6606 (JP)**

(72) Inventors:
    • **TSUCHIYA, Hideyuki**
      **Tokyo 100-6606 (JP)**
    • **TOKUDA, Yoshiyuki**
      **Tokyo 100-6606 (JP)**
    • **SUGA, Keita**
      **Tokyo 100-6606 (JP)**

(74) Representative: **Berggren Oy**
    **P.O. Box 16**
    **Eteläinen Rautatiekatu 10A**
    **00101 Helsinki (FI)**

(54) **NEGATIVE-ELECTRODE MATERIAL FOR LITHIUM-ION SECONDARY CELL, METHOD FOR MANUFACTURING SAME, NEGATIVE ELECTRODE FOR LITHIUM-ION SECONDARY CELL, AND LITHIUM-ION SECONDARY CELL**

(57)    A negative electrode material for a lithium-ion secondary battery includes composite particles, each of the composite particles having a structure in which plural flat graphite particles are stacked, wherein the composite particles have a particle size distribution D90/D10 of from 2.0 to 5.0, or wherein the plural flat graphite particles have a particle size distribution D90/D10 of from 2.0 to 4.4.

EP 4 099 442 A1

**Description**

Technical Field

The present disclosure relates to a negative electrode material for a lithium-ion secondary battery and a method of producing the same, a negative electrode for a lithium-ion secondary battery, and a lithium-ion secondary battery.

Background Art

Lithium-ion secondary batteries have been widely used in electronic devices such as laptop personal computers (PCs), mobile phones, smartphones, and tablet PCs by virtue of their properties such as small size, light weight, and high energy density. In the background of recent environmental issues such as global worming caused by $CO_2$ emissions, clean electric vehicles (EVs) that run only on batteries, hybrid electric vehicles (HEVs) that utilize gasoline engines and batteries in combination, plug-in hybrid electric vehicles (PHEVs) and the like have become widespread, and lithium-ion secondary batteries (in-vehicle lithium-ion secondary batteries) are used as batteries mounted on EVs, HEVs, PHEVs and the like. Further, lithium-ion secondary batteries have also been used recently for power storage, and the applications of lithium-ion secondary batteries are expanding in various fields.

Input characteristics of lithium-ion secondary batteries are greatly influenced by the performance of negative electrode materials for the lithium-ion secondary batteries. As materials for negative electrode materials for lithium-ion secondary batteries, carbon materials are widely used. For example, as materials for obtaining a high-density negative electrode, carbon materials having a high degree of crystallinity, such as artificial graphite and spherical natural graphite obtained by spheroidizing natural vein graphite, have been proposed.

As for the artificial graphite, for example, International Publication No. 2015/147012 discloses a negative electrode material for a lithium-ion secondary battery including composite particles, each of the composite particles including spherical graphite particles and plural flat graphite particles that are gathered or bound together such that the flat graphite particles have non-parallel orientation planes. Further, Japanese Patent Application Laid-Open No. 2005-302725 discloses a negative electrode active material for a lithium-ion secondary battery including carbon powder particles, each particles having a form in which plate-shaped particles are oriented in the direction of the planes and are stacked to be assembled in a primarily stable structure, and having fine pores formed on the surface thereof.

SUMMARY OF INVENTION

Technical Problem

When a lithium-ion secondary battery is exposed to a high temperature, the electrolytic solution tends to be easily decomposed by the negative electrode active material since the activation energy for the decomposition of the electrolytic solution is lowered. The progress of the decomposition reaction of the electrolytic solution leads to, for example, a decrease in the capacity of the battery owing to the consumption of the electrolytic solution, and therefore, it is desirable to suppress the decomposition of the electrolytic solution as much as possible. However, in conventional carbon materials, while improvements have been sought for in terms of capacity increase and cycle characteristics, there is room for improvement in suppressing the decomposition reaction of the electrolytic solution during storage at a high temperature.

In addition, for commercial vehicles such as buses and courier delivery vehicles, it is relatively easy to adopt electrification, since the travel distance can be easily estimated. Since such commercial vehicles are mainly expected to run during the daytime, lithium-ion secondary batteries preferably have a particularly excellent high-temperature resistance.

Further, it is difficult to maintain liquid circulation of the electrolytic solution to sufficiently secure the mobility of lithium ions while suppressing the decomposition of the electrolytic solution at the interface between the negative electrode material and the electrolytic solution by conventional techniques,

In view of the foregoing circumstances, the present disclosure is directed to providing a negative electrode material for a lithium-ion secondary battery that enables to produce a lithium-ion secondary battery having excellent high-temperature resistance and excellent liquid permeation property of the electrolytic solution; a production method thereof; and a negative electrode for a lithium-ion secondary battery and a lithium-ion secondary battery produced using the negative electrode material.

Solution to Problem

Means for solving the above problems include the following aspects.

[1] A negative electrode material for a lithium-ion secondary battery, the negative electrode material including composite particles, each of the composite particles having a structure in which a plurality of flat graphite particles are stacked, wherein the composite particles have a particle size distribution D90/D10 of from 2.0 to 5.0.

[2] A negative electrode material for a lithium-ion secondary battery, the negative electrode material including composite particles, each of the composite particles having a structure in which a plurality of flat graphite particles are stacked, wherein the plurality of flat graphite particles have a particle size distribution D90/D10 of from 2.0 to 4.4.

[3] The negative electrode material for a lithium-ion secondary battery according to [2], wherein the composite particles have a particle size distribution D90/D10 of from 2.0 to 5.0.

[4] The negative electrode material for a lithium-ion secondary battery according to any one of [1] to [3], wherein the composite particles have a specific surface area of from 0.5 $m^2/g$ to 2.8 $m^2/g$ as measured by nitrogen adsorption measurement at 77 K.

[5] The negative electrode material for a lithium-ion secondary battery according to any one of [1] to [4], wherein the composite particles have a degree of graphitization of from 93.0% to 98.0% as measured by an X-ray diffraction method.

[6] The negative electrode material for a lithium-ion secondary battery according to any one of [1] to [5], wherein the graphite particles have a ratio of peak intensities (P1/P2) of a diffraction peak (P1) of a (101) plane of a rhombohedral structure to a diffraction peak (P2) of a (101) plane of a hexagonal structure in an X-ray diffraction pattern by a CuKa ray, of 0.15 or less.

[7] The negative electrode material for a lithium-ion secondary battery according to any one of [1] to [6], wherein:

low-crystalline carbon is disposed on at least a part of a surface of the composite particles, and
the composite particles at which low-crystalline carbon is disposed have an R value of 0.50 or less as measured by Raman spectroscopy.

[8] The negative electrode material for a lithium-ion secondary battery according to any one of [1] to [6], wherein:

low-crystalline carbon is not disposed on a surface of the composite particles, and
the composite particles at which low-crystalline carbon is not disposed have an R value of 0.20 or less as measured by Raman spectroscopy.

[9] The negative electrode material for a lithium-ion secondary battery according to any one of [1] to [8], wherein an oil absorption of the composite particles is from 15 mL/100g to 45 mL/100g.

[10] The negative electrode material for a lithium-ion secondary battery according to any one of [1] to [9], wherein the composite particles have a springback amount of 40% or more, the springback amount being obtained by compressing the composite particles until the composite particles have a density of 1.8 $g/cm^3$, releasing pressure therefrom, and dividing, by the density of 1.8 $g/cm^3$, an absolute value of a difference between the density of 1.8 $g/cm^3$ and a density of the composite particles after releasing the pressure.

[11] A negative electrode for a lithium-ion secondary battery, the negative electrode including:

a negative electrode material layer including the negative electrode material for a lithium-ion secondary battery according to any one of [1] to [10]; and
a current collector.

[12] A lithium-ion secondary battery, including:

the negative electrode for a lithium-ion secondary battery according to [11];
a positive electrode; and
an electrolytic solution.

[13] A method of producing a negative electrode material for a lithium-ion secondary battery, the method including:

classifying a plurality of flat graphitizable aggregates and removing at least one selected from the group consisting of fine particles and coarse particles;
mixing a classified plurality of flat graphitizable aggregates with a binder to obtain a mixture;
processing the mixture to produce secondary particles, each of the secondary particles having a structure in which the plurality of flat graphitizable aggregates are stacked;
graphitizing the secondary particles to obtain composite particles, each of the composite particles having a structure in which a plurality of flat graphite particles are stacked; and

classifying the composite particles and removing at least one selected from the group consisting of fine particles and coarse particles.

[14] The method of producing a negative electrode material for a lithium-ion secondary battery according to [13], wherein the negative electrode material for a lithium-ion secondary battery is the negative electrode material for a lithium-ion secondary battery according to any one of [1] to [10].

[15] The method of producing a negative electrode material for a lithium-ion secondary battery according to [13] or [14], wherein the flat graphitizable aggregates have a particle size distribution D90/D10 of from 2.0 to 4.4.

[16] The method of producing a negative electrode material for a lithium-ion secondary battery according to any one of [13] to [15], wherein the secondary particles to be subjected to graphitization have a bulk density of from 0.4 g/cm$^3$ to 1.0 g/cm$^3$.

[17] The method of producing a negative electrode material for a lithium-ion secondary battery according to any one of [13] to [16], wherein the processing of the mixture includes heating the mixture to volatilize a volatile component of the binder.

[18] The method of producing a negative electrode material for a lithium-ion secondary battery according to [17], wherein the heating includes depressurizing an atmosphere. Advantageous Effects of Invention

The present disclosure provides a negative electrode material for a lithium-ion secondary battery that enables to produce a lithium-ion secondary battery having excellent high-temperature resistance and excellent liquid permeation property of the electrolytic solution; a production method thereof; and a negative electrode for a lithium-ion secondary battery and a lithium-ion secondary battery produced using the negative electrode material.

BRIEF DESCRIPTION OF DRAWINGS

FIG. 1A shows an electron micrograph of the negative electrode material of Example 1.
FIG. 1B shows an electron micrograph of a cross-section of the negative electrode material of Example 1.
FIG. 2A shows an electron micrograph of the negative electrode material of Comparative Example 1.
FIG. 2B shows an electron micrograph of a cross-section of the negative electrode material of Comparative Example 1.
FIG. 3A shows an electron micrograph of the negative electrode material of Comparative Example 2.
FIG. 3B shows an electron micrograph of a cross-section of the negative electrode material of Comparative Example 2.
FIG. 4A shows an electron micrograph of the negative electrode material of Comparative Example 3.
FIG. 4B shows an electron micrograph of a cross-section of the negative electrode material of Comparative Example 3.

DESCRIPTION OF EMBODIMENTS

Embodiments for carrying out the invention will be described below in detail. However, the invention is not limited to the following embodiments. In the following embodiments, components (including elemental steps, etc.) thereof are not essential unless otherwise specified. The same applies to numerical values and ranges, which do not limit the invention.

In the present disclosure, the term "step (process)" encompasses an independent step separated from other steps as well as a step that is not clearly separated from other steps, as long as a purpose of the step can be achieved.

In the present disclosure, a numerical range specified using "(from) ... to ..." represents a range including the numerical values noted before and after "to" as a minimum value and a maximum value, respectively.

In the numerical ranges described in a stepwise manner in the present disclosure, the upper limit value or the lower limit value described in one numerical range may be replaced with the upper limit value or the lower limit value of another numerical range described in a stepwise manner. Further, in the numerical ranges described in the present disclosure, the upper limit value or the lower limit value of the numerical ranges may be replaced with the values shown in the Examples.

In the present disclosure, each component may include plural substances corresponding to the component. In the case in which plural substances corresponding to a component are present in a composition, the amount or content of the component in the composition means the total amount or content of the plural substances present in the composition unless otherwise specified.

In the present disclosure, each component may include plural kinds of particles corresponding to the component.

In the case in which plural kinds of particles corresponding to a component are present in a composition, the particle size of the component means a value with respect to the mixture of the plural kinds of particles present in the composition, unless otherwise specified.

The term "layer" or "film" as used herein encompasses, when a region in which the layer or the film is present is observed, not only a case in which the layer or the film is formed over the entire observed region, but also a case in which the layer or the film is formed at only a part of the observed region.

The term "layered (stacked)" as used herein means disposing layers on one another, in which two or more layers may be bonded with each other, or may be attachable to/detachable from one another.

In the present disclosure, the particle size distribution of primary particles contained in a negative electrode material or composite particles can be measured using a laser diffraction particle size distribution analyzer. The average particle size of particles means a particle size at which the cumulative volume from the small diameter side of a volume-based particle size distribution reaches 50% (D50). D90 means a particle size at which the cumulative volume from the small diameter side of the volume-based particle size distribution reaches 90%, and D10 means a particle size at which the cumulative volume from the small diameter side of the volume-based particle size distribution reaches 10%.

[Negative Electrode Material for Lithium-Ion Secondary Battery]

A negative electrode material for a lithium-ion secondary battery according to the first embodiment of the present disclosure includes composite particles, each of the composite particles having a structure in which plural flat graphite particles are stacked, wherein the composite particles have a particle size distribution D90/D10 of from 2.0 to 5.0.

By the negative electrode material according to the first embodiment of the present disclosure, a lithium-ion secondary battery having excellent high-temperature resistance and excellent liquid permeation property of the electrolytic solution can be produced. While the reason for this is not necessarily clear, it can be presumed as follows. The negative electrode material according to the first embodiment of the present disclosure includes specific composite particles, each of the composite particles having a structure in which plural flat graphite particles are stacked. It is presumed that, when a negative electrode material is produced, the stacked structure can reduce the interface to the electrolytic solution inside the specific composite particles as compared to, for example, the negative electrode material disclosed in International Publication No. 2015/147012, enabling suppression of the decomposition of the electrolytic solution even at a high temperature. Further, it is presumed that the stacked structure makes the particles less compressible when pressure is applied in preparing a negative electrode material, and that, therefore, the path of the electrolytic solution is less likely to be blocked. It is presumed that this enables to favorably maintain the liquid permeation property of the electrolytic solution. Further, in the negative electrode material according to the first embodiment of the present disclosure, the specific composite particles have a particle size distribution D90/D10 of from 2.0 to 5.0. It is presumed that, while the specific composite particles have relatively small pore volume therein, by the specific composite particles having a particle size distribution D90/D10 of from 2.0 to 5.0 and thereby having a relatively small variation in the particle size, the path of the electrolytic solution can be favorably maintained by the spaces between the particles.

The negative electrode material for a lithium-ion secondary battery according to the second embodiment of the present disclosure includes composite particles, each of the composite particles having a structure in which plural flat graphite particles are stacked, wherein the plural flat graphite particles have a particle size distribution of D90/D10 of from 2.0 to 4.4.

By the negative electrode material according to the second embodiment of the present disclosure, a lithium-ion secondary battery having excellent high-temperature resistance and excellent liquid permeation property of the electrolytic solution can be produced. While the reason for this is not necessarily clear, it can be presumed as follows. The negative electrode material according to the second embodiment of the present disclosure includes specific composite particles, each of the specific composite particles having a structure in which plural flat graphite particles are stacked. It is presumed that, when a negative electrode material is produced, the stacked structure can reduce the interface to the electrolytic solution inside the specific composite particles as compared to, for example, the negative electrode material disclosed in International Publication No. 2015/147012, enabling suppression of the decomposition of the electrolytic solution even at a high temperature. Further, it is presumed that the stacked structure makes the particles less compressible when pressure is applied in preparing a negative electrode material, and that, therefore, the path of the electrolytic solution is less likely to be blocked. It is presumed that this enables to favorably maintain the liquid permeation property of the electrolytic solution. Further, in the negative electrode material according to the second embodiment of the present disclosure, the plural flat graphite particles (i.e., primary particles) have a particle size distribution D90/D10 of from 2.0 to 4.4. It is presumed that, by the plural flat graphite particles having a relatively uniform particle size, the stacked structure can be favorably formed, thereby reducing the pore volume inside the composite particles and reducing the specific surface area. It is presumed that this suppresses the decomposition of the electrolytic solution, whereby more favorable high-temperature resistance can be achieved. Further, since particles having a relatively uniform stacked structure and a relatively high hardness, that is, elasticity, can be obtained, it is presumed that, when pressure is applied in preparing a negative electrode, the particles tend to return to its original shape, in other words, the particles tend to spring back. As a result, it is presumed that, when a battery is fabricated, the path of the electrolytic solution can be favorably maintained and the liquid permeation property can be further improved.

Hereinafter, the negative electrode material for a lithium-ion secondary battery according to the first and second embodiments may be comprehensively referred to as a "negative electrode material according to the present disclosure" or a "negative electrode material".

Further, the composite particles, each of which has a structure in which plural flat graphite particles are stacked, may be referred to as a "specific composite particles".

It has also been found that the negative electrode material for a lithium-ion secondary battery according to the present disclosure can suppress precipitation of metallic lithium on the negative electrode during the charging. Although the reason for this is unclear, it is presumed that this is partly because the path of the electrolytic solution is favorably maintained, whereby the lithium ions can easily move to the positive electrode rather than staying at the negative electrode.

The negative electrode material according to the present disclosure may or may not include particles other than the specific composite particles. In other words, the negative electrode material according to the present disclosure may consist essentially of the specific composite particles, and may be a mixture of the specific composite particles and other particles. Here, the expression "consist essentially of the specific composite particles" means that, even if particles other than the specific composite particles are blended in the negative electrode material in a small amount (e.g., 5% by mass or less, preferably 3% by mass or less, with respect to the total amount of the negative electrode material), the battery performance is not practically affected.

Examples of the particles other than the specific composite particles include a negative electrode material other than the specific composite particles, a conductive aid, and the like.

Examples of the negative electrode material other than the specific composite particles include natural graphite, artificial graphite, amorphous coated graphite, resin coated graphite, amorphous carbon, and absorbing metal particles.

Examples of the conductive aid include carbon black, graphite, acetylene black, an oxide that exhibits conductivity, and a nitride that exhibits conductivity.

In the case in which the negative electrode material is a mixture of the specific composite particles and particles other than the specific composite particles, the content of the specific composite particles with respect to the total amount of the negative electrode material may be 50% by mass or more, 60% by mass or more, 70% by mass or more, 80% by mass or more, or 90% by mass or more. Further, the content of the specific composite particles with respect to the total amount of the negative electrode material may be 90% by mass or less.

[Specific Composite Particles]

In the specific composite particles, each of the specific composite particles has a structure in which plural flat graphite particles are stacked (i.e., stacking).

Flat graphite particles refer to non-spherical graphite particles having anisotropy in shape. Examples of the flat graphite particles include vein, flake, and partially vein graphite particles.

Composite particles mean particles in which primary particles are gathered or bound together. Therefore, each of the specific composite particles has a structure in which plural flat graphite particles are stacked with their main planes facing each other, thereby being gathered or bound together. Accordingly, the plural flat graphite particles are stacked almost in parallel to form composite particles. Whether or not the flat graphite particles are stacked or not can be confirmed by microscopic observation.

The state in which plural flat graphite particles are gathered or bound together refers to a state in which two or more flat graphite particles are gathered or bound together. Being bound means that particles are chemically bound to each other either directly or via a carbon material. Being gathered means that, while the particles are not chemically bound to each other, the particles maintain their shape as an assembled body owing to their shapes or the like.

The flat graphite particles may be gathered or bound together via a carbon material. Examples of the carbon material include graphite that results from graphitization of an organic binder such as tar or pitch. Whether or not the flat graphite particles are gathered or bound together can be confirmed by, for example, observation by a scanning electron microscope.

The flat graphite particles and the raw material thereof are not particularly limited, and examples thereof include artificial graphite, natural vein graphite, natural flake graphite, coke and resin. In particular, artificial graphite is preferable from the viewpoint of low deformability and a low specific surface area. In a case in which natural graphite is partly used as a raw material, it is preferable that the content of the natural graphite in the specific composite particles is 40% by mass or less, from the viewpoint of suppressing spheroidization and ease of obtaining a stacked structure.

The average particle size of the flat graphite particles that constitute the specific composite particles is, for example, preferably from 5 to 25 μm, more preferably from 8 to 20 μm, and further preferably from 10 to 15 μm, from the viewpoint of ease of the gathering or the binding.

The average particle size of the flat graphite particles can be obtained by any of the following methods.

The average particle size of the flat graphitizable aggregates described below, which are a raw material of the specific composite particles, (i.e., the particle size at which the cumulative volume from the small diameter side of a volume-based particle size distribution reaches 50% (D50)) may be regarded as the average particle size of the flat graphite particles that constitute the specific composite particles.

Further, the average particle size of the flat graphite particles may be obtained as the median value of the particle sizes of random 100 flat graphite particles in an observation of the cross-section of the specific composite particles. In this case, the particle size of each of the flat graphite particles is an equivalent circle diameter, which is a diameter of a circle having the same area as its projected area.

The flat graphite particles preferably have a particle size distribution D90/D10 of 4.4 or less, more preferably 4.0 or less, and further preferably 3.5 or less. When the flat graphite particles have a particle size distribution D90/D10 of 4.4 or less, the high-temperature resistance and the liquid permeation property tend to be further improved. From the viewpoint of reducing the manufacturing cost, the flat graphite particles may have a particle size distribution D90/D10 of 2.0 or more. From the foregoing viewpoints, the flat graphite particles preferably have a particle size distribution D90/D10 of from 2.0 to 4.4, more preferably from 2.0 to 4.0, and further preferably from 2.0 to 3.5.

Incidentally, in the negative electrode material according to the second embodiment, the flat graphite particles have a particle size distribution D90/D10 of from 2.0 to 4.4.

The particle size distribution D90/D10 of the flat graphite particles can be obtained by any of the following methods.

The particle size distribution D90/D10 of the flat graphitizable aggregates described above that is a raw material of the specific composite particles, obtained by a measurement with a laser diffraction particle size distribution analyzer (e.g., SALD3100, manufactured by Shimadzu Corporation), may be regarded as the particle size distribution D90/D10 of the flat graphite particles that constitute the specific composite particles.

Further, the particle size distribution D90/D10 of the flat graphite particles can be obtained by observing cross-sections of the specific composite particles using a scanning microscope, and obtaining a ratio of the particle size (D90) at which the cumulative volume from the small diameter side reaches 90% to the particle size (D10) at which the cumulative volume from the small diameter side reaches 10% in random 1000 flat graphite particles. In this case, the particle size of each of the flat graphite particles is an equivalent circle diameter, which is a diameter of a circle having the same area as its projected area.

The flat graphite particles preferably have an aspect ratio of, for example, from 2 to 20, more preferably from 4 to 10, the aspect ratio being represented by A/B in which A represents the length in the major axis direction and B represents the length in the minor axis direction. When the aspect ratio is 2 or more, the outer surface area is further increased, by which the particles tend to aggregate owing to a force of reducing the applied buoyancy. By the particles aggregating with the planes having the major axis facing each other so as to minimize the outer surface area, areas between the particles are maximized, and accordingly, combined with the van der Waals force between the particles, the particles tend to adhere to each other more tightly and be stabilized. When the aspect ratio is 20 or less, input/output characteristics of the lithium-ion secondary battery, such as rapid charge/discharge characteristics, tend to be further improved. When the aspect ratio is 20 or less, a situation can be prevented in which each of the flat graphite particles is thinner, whereby higher number of particles are stacked, leading to increased spaces inside the particles and thereby an increased specific surface area, resulting in deterioration of storage characteristics.

The aspect ratio is an arithmetic average value of the measured values of A/B for each of randomly selected 100 graphite particles out of the graphite particles observed with a microscope. In the observation for the aspect ratio, the length A in the major axis direction and the length B in the minor axis direction are measured as follows. In a projected image of a graphite particle observed using a microscope, the length A in the major axis direction is obtained as a distance between tangents a1 and a2, which are two parallel tangents to the graphite particle and are selected such that the distance therebetween takes the maximum value. The length B in the minor axis direction is obtained as a distance between tangents b1 and b2, which are two parallel tangents to the graphite particle and are selected such that the distance therebetween takes the minimum value.

Low-crystalline carbon may be disposed on at least a part of the surface of the specific composite particles. When low-crystalline carbon is disposed on at least a part of the surface of the specific composite particles, charging characteristics at low temperature tend to be further improved when a lithium-ion secondary battery is fabricated.

On the other hand, low-crystalline carbon does not need to be disposed on the surface of the specific composite particles. When low-crystalline carbon is not disposed on the surface of the specific composite particles, a possibility of deterioration of storage characteristics tends to be reduced, the deterioration being due to the occurrence of cracks and peelings of the specific composite particles during the pressing in the process of fabricating an electrode, which increases the decomposition activity of the electrolytic solution. Further, this has an advantage in expanding flexibility in manufacturing conditions. It has been found that the negative electrode material according to the present disclosure tends to enable excellent rapid input/output characteristics even when low-crystalline carbon is not disposed on the surface thereof. This is presumably because liquid circulation (and consequently the diffusion rate of the solvated lithium) has a greater influence on the rapid input/output characteristics than the surface structure of the specific composite particles.

The "low-crystalline carbon" refers to carbon having an R value of 0.2 or more as measured by Raman spectroscopy.

The R value is a value given as a peak intensity ratio Id/Ig in which Id is an intensity of the largest peak that appears at around 1360 cm$^{-1}$ and Ig is an intensity of the largest peak that appears at around 1580 cm$^{-1}$, in laser Raman spectroscopy at a wavelength of 532 nm.

The peak that appears at around 1360 cm$^{-1}$ is a peak that is generally identified as corresponding to the amorphous carbon structure, and is a peak observed between 1300 cm$^{-1}$ and 1400 cm$^{-1}$, for example. The peak that appears at around 1580 cm$^{-1}$ is a peak that is generally identified as corresponding to the graphite crystal structure, and is a peak observed between 1530 cm$^{-1}$ and 1630 cm$^{-1}$, for example.

The R value can be determined using a Raman spectrometer (e.g., NSR-1000 manufactured by JASCO Corporation) under the following conditions, the baseline of the obtained spectrum being within the following range.

- Laser wavelength: 532 nm
- Irradiation intensity: 1.5 mW (value measured with a laser power monitor)
- Measurement range: 830 cm$^{-1}$ to 1940 cm$^{-1}$
- Irradiation time: 60 seconds
- Irradiation area : 4 $\mu$m$^2$
- Baseline: 1050 cm$^{-1}$ to 1750 cm$^{-1}$

(Average Particle Size)

The specific composite particles preferably have an average particle size of, for example, from 5 to 30 $\mu$m, more preferably from 10 to 25 $\mu$m, and further preferably from 12 to 20 $\mu$m, from the viewpoint of further improving the permeability of the electrolytic solution.

The average particle size of the specific composite particles can be measured using a laser diffraction particle size distribution analyzer (e.g., SALD3100, manufactured by Shimadzu Corporation). The average particle size is the particle size (D50) at which the cumulative volume from the small diameter side of the volume-based particle size distribution reaches 50%.

In the case in which an electrode (negative electrode) is fabricated using the negative electrode material according to the present disclosure, examples of the method for measuring the average particle size of the specific composite particles include: a method in which a sample electrode is fabricated, embedded in an epoxy resin, mirror-polished, and observed in its cross-section with a scanning electron microscope (e.g., VE-7800 manufactured by Keyence Corporation); and a method in which a cross-section of an electrode prepared using an ion milling apparatus (e.g., E-3500, manufactured by Hitachi High-Tech Corporation) is observed using a scanning electron microscope (e.g., VE-7800 manufactured by Keyence Corporation). The average particle size in this case is a median value of the particle sizes of 100 randomly selected specific composite particles.

(Particle Size Distribution D90/D10)

The specific composite particles in the negative electrode material preferably have a particle size distribution D90/D10 of 5.0 or less, preferably 4.0 or less, and further preferably 3.0 or less. When the composite particles have a particle size distribution D90/D10 of 5.0 or less, the path of the electrolytic solution tends to be favorably maintained, and liquid permeation property of the electrolytic solution tends to be favorably maintained.

The specific composite particles may have a particle size distribution D90/D10 of 2.0 or more.

From the foregoing viewpoints, the specific composite particles preferably have a particle size distribution of from 2.0 to 5.0, more preferably from 2.0 to 4.0, and further preferably from 2.0 to 3.0.

Incidentally, in the negative electrode material according to the first embodiment, the specific composite particles have a particle size distribution D90/D10 of from 2.0 to 5.0.

The particle size distribution D90/D10 can be measured using a laser diffraction particle size distribution analyzer (e.g., SALD3100, manufactured by Shimadzu Corporation).

In the case in which an electrode (negative electrode) is fabricated using the negative electrode material according to the present disclosure, examples of the method for measuring the particle size distribution D90/D10 of the specific composite particles include: a method in which a sample electrode is fabricated, embedded in an epoxy resin, mirror-polished, and observed in its cross-section with a scanning electron microscope (e.g., VE-7800 manufactured by Keyence Corporation); and a method in which a cross-section of an electrode prepared using an ion milling apparatus (e.g., E-3500, manufactured by Hitachi High-Tech Corporation) is observed using a scanning electron microscope (e.g.,

VE-7800 manufactured by Keyence Corporation). The particle size distribution D90/D10 in this case can be obtained by the following method.

(1) The area Sn of a projected particle image (n is a particle unique number assigned to the selected particle) is obtained using a binarization method or the like.
(2) The equivalent circle diameter $Ln = \sqrt{Sn} / \pi$ is obtained from the area Sn, assuming that the particle is a true sphere with an ideal shape.
(3) The sphere volume $Vn = (4/3) \pi (Ln)^3$ is obtained based on the equivalent circle diameter Ln.
(4) The processes (1) to (3) are repeated for selected 100 particles.
(5) In the distribution curve in which the vertical axis represents the cumulative value % and the horizontal axis represents the particle size, the particle size at a point at which the curve corresponds to 10% in the horizontal axis is defined as 10% diameter (D10), and the particle size at a point at which the curve corresponds to 90% in the horizontal axis is defined as 90% diameter (D90), whereby D90/D10 is obtained.

(Standard Deviation of Particle Size Distribution)

The standard deviation of the particle size distribution of the specific composite particles in the negative electrode material is preferably 0.30 or less, more preferably 0.25 or less, and further preferably 0.20 or less. It is presumed that, when the standard deviation of the particle size distribution is 0.30 or less, the path of the electrolytic solution tends to be preferably maintained, whereby the liquid permeation property of the electrolytic solution is favorably maintained. The lower limit of the standard deviation of the particle size distribution is not particularly limited. The standard deviation of the particle size distribution can be measured using a laser diffraction particle size distribution analyzer (e.g., SALD3100, manufactured by Shimadzu Corporation) based on a frequency distribution graph in which the horizontal axis indicates the log scale of the particle size and the vertical axis indicates the amount of particles (%).

(Specific Surface Area)

The specific composite particles preferably have a specific surface area ($N_2$ specific surface area) of from 0.5 to 2.8 $m^2/g$, more preferably from 0.5 to 2.4 $m^2/g$, further preferably from 0.5 to 2.2 $m^2/g$, and particularly preferably from 0.5 $m^2/g$ to less than 2.0 $m^2/g$, the specific surface area being measured by nitrogen adsorption measurement at 77 K. When the specific surface area is 0.5 $m^2/g$ or more, current density per unit area does not rise rapidly, whereby the load is suppressed and rapid charge/discharge efficiency tends to be improved. When the specific surface area is 2.8 $m^2/g$ or less, the interface to the electrolytic solution is not too large, whereby the decomposition of the electrolytic solution is suppressed, and more favorable high-temperature resistance tends to be obtained.

The $N_2$ specific surface area can be specifically measured by the BET method based on the adsorption isotherm obtained by the nitrogen adsorption measurement at 77K. Specifically, the specific surface area can be obtained by the method described in the Examples.

(Oil Absorption)

The oil absorption of the specific composite particles is preferably from 10 to 60 mL/100g, more preferably from 15 to 45 mL/100g, and further preferably from 20 to 40 mL/100g.

It is presumed that the oil absorption of 45 mL/100g or less indicates that the particles have only a small volume of pores inside and on the surface thereof. It is presumed that this enables to improve storage characteristics owing to the small interface to the electrolytic solution. In addition, owing to the small interface, the amount of the binder used for fabricating a negative electrode can be reduced, whereby electric resistance tends to be reduced and battery performance tends to be improved. Further, owing to the small pore volume, the amount of solvent at the time of drying the electrode can be reduced, which is advantageous in terms of environment and manufacturing cost such as reduction in equipment and electric power involved in the drying.

When the oil absorption is 10 mL/100g or more, increase in the viscosity of the slurry at the time of kneading with a binder and the like owing to the small amount of spaces between the particles tends to be suppressed. Further, the binder tends to spread favorably, whereby the kneading can be easily carried out. In addition, the spaces between the particles, which allow lithium ions to move, tend to be secured.

In the present disclosure, the oil absorption may be measured by a method described in JIS K 6217-4: 2017 (Carbon Black for Rubber - basic characteristics - section IV: measurement of oil absorption), using linseed oil (e.g., manufactured by Kanto Chemical Co., Inc.) as the reagent instead of dibutyl phthalate (DBP). Specifically, linseed oil is applied to a test powder using a constant rate buret, and a change in the viscosity characteristics is measured using a torque detector. The addition amount of linseed oil per unit mass of the test powder that corresponds to the torque of 70% of the maximum torque generated is regarded as the oil absorption (mL/100 g). As for the measurement apparatus, an absorption tester available from Asahisouken Corporation (product name: S-500), for example, may be used. Specifically, the oil absorption can be obtained as described in the Examples.

(Saturated Tap Density)

The saturated tap density of the specific composite particles is not particularly limited, and is preferably from 0.80 to 1.60 $g/cm^3$, more preferably from 0.90 to 1.50 $g/cm^3$, and further preferably from 1.00 to 1.40 $g/cm^3$.

The saturated tap density is an indicator of densification of the negative electrode. When the saturated tap density is 0.80 $g/cm^3$ or more, compressibility in forming a negative electrode tends to improve, whereby higher electrode density tends to be achieved, and a lithium-ion secondary battery having a higher capacity tends to be obtained. When the saturated tap density is 1.60 $g/cm^3$ or less, permeability of the electrolytic solution is further improved by the presence of adequate amount of spaces between the particles, whereby input/output characteristics such as rapid charge/discharge characteristics tend to be further improved.

The saturated tap density of the specific composite particles can be measured in accordance with a known method. For example, 100 $cm^3$ of test powder are placed in a graduated cylinder having a capacity of 150 $cm^3$ (e.g., KRS-406 manufactured by Kuramochi Scientific Instruments Co., Ltd.), and are dropped from the height of 5 cm with the cylinder plugged, whereby saturated tap density can be obtained using the mass (g) and the volume ($cm^3$) of the test powder. The number of tapping is not limited as long as it is until the density is saturated. Specifically, the saturated tap density can be obtained by the method described in the Examples.

(Press Pressure)

In the specific composite particles, the press pressure measured according to the following method is preferably 2.1 $kN/cm^2$ or more, more preferably 2.4 $kN/cm^2$ or more, and further preferably 2.7 $kN/cm^2$ or more. The press pressure can be used as one of the indicators of the hardness of the specific composite particles. When the press pressure is 2.1 $kN/cm^2$ or more, the specific composite particles have a relatively high hardness, whereby, when a battery is fabricated, the path of the electrolytic solution tends to be favorably maintained even if pressure is applied in the process of fabricating a negative electrode.

The press pressure may be 4.5 $kN/cm^2$ or less, 4.3 $kN/cm^2$ or less, or 4.0 $kN/cm^2$ or less. When the press pressure is 4.5 $kN/cm^2$ or less, since the hardness is not so high, the pressure of the pressing at the time of fabricating a negative electrode can be reduced, whereby situations tend to be able to be prevented in which an underlying copper foil is extended by the pressure, leading to unintended sizes, in which warping occurs, and in which peeling occurs at the interface between the active material and the current collector by the warping, leading to reduced capacity or increased resistance. Further, situations tend to be able to be suppressed in which high-temperature storage characteristics are deteriorated owing to excessive load being applied to the active material, whereby the crystals of the active material are cracked, or owing to the increase in the rhombohedral crystal structure, which is a structure in which the layers of the graphite crystals are displaced.

From the foregoing viewpoints, the press pressure is preferably from 2.1 to 4.5 $kN/cm^2$, more preferably from 2.4 to 4.3 $kN/cm^2$, and further preferably from 2.7 to 4.0 $kN/cm^2$.

The press pressure is measured by the following method. A mold having a diameter of 15 mm is filled with 3.0 g of the specific composite particles, and the specific composite particles are compressed using an autograph (e.g., manufactured by Shimadzu Corporation) at a constant rate of 10 mm/min. During the compression, the distance from the bottom of the negative electrode material to the pressed surface is measured, and the density during the compression is calculated from the volume of the negative electrode material, obtained by multiplying the foregoing distance by the base area of the mold (e.g., 1.767 $cm^2$). In the press hammer of the autograph, a load cell is attached. The pressure of the pressing ($kN/cm^2$) at the point where the density reaches a predetermined density of 1.8 $g/cm^3$ is regarded as the press pressure. Specifically, the press pressure can be obtained by the method described in the Examples.

(Springback Amount)

The specific composite particles preferably have a springback amount measured by the following method of 40% or more, more preferably 45% or more, and further preferably 50% or more. The springback amount is an indicator of elasticity of the specific composite particles, and it can be considered that the larger the value is, the higher the elasticity is. Therefore, the springback amount or 40% or higher is preferable since the specific composite material has an adequate elasticity, whereby its shape can be easily recovered after applying pressure thereto in the process of fabricating a negative electrode.

The springback amount can be obtained by compressing the composite particles until the composite particles have a density of 1.8 g/cm³, releasing the pressure therefrom, and dividing, by the density of 1.8 g/cm³, the absolute value of the difference between the density of 1.8 g/cm³ and the density of the composite particles after releasing the pressure. Specifically, a mold having a diameter of 15 mm is filled with 3.0 g of the specific composite particles, and the specific composite particles are compressed using an autograph (e.g., manufactured by Shimadzu Corporation) at a constant rate of 10 mm/min until the composite particles have a density of 1.8 g/cm³ (reference density). After releasing the pressure, the springback amount is obtained by dividing, by the density of 1.8 g/cm³, the absolute value of the difference between the density of 1.8 g/cm³ and the density of the composite particles after releasing the pressure. Specifically, the springback amount can be obtained by the method described in the Examples.

(Peak Intensity Ratio of Rhombohedral Structure)

In the specific composite particles, the ratio of peak intensities (P1/P2) of a diffraction peak (P1) of a (101) plane of a rhombohedral structure to a diffraction peak (P2) of a (101) plane of a hexagonal structure in an X-ray diffraction pattern by a CuKa ray (also referred to as a peak intensity ratio of the rhombohedral structure) may be 0.15 or less, 0.10 or less, or 0.05 or less. The peak intensity ratio (P1/P2) is preferably within the undetectable range by the following method. When the peak intensity ratio (P1/P2) is 0.15 or less, the negative electrode material for a lithium-ion secondary battery has a higher degree of graphitization, whereby charge/discharge capacity tends to be high.

The peak intensity ratio of the rhombohedral structure can be calculated based on the intensity ratio of the diffraction line of the rhombohedral structure (PI: diffraction angle 43.2°) to the diffraction line of the hexagonal structure (P2: diffraction angle 44.3°) in an X-ray diffraction pattern by a CuKa ray. Here, the diffraction angle is represented by $2\theta$ ($\theta$ represents the Bragg angle). The diffraction line of the (101) plane of the rhombohedral structure appears at the diffraction angle of 43.2°, and the diffraction line of the (101) plane of the hexagonal structure appears at the diffraction angle of 44.3°

The peak intensity ratio of the rhombohedral structure can be controlled by, for example, adjusting the degree of graphitization (e.g., adjustment of the temperature of heat treatment); carrying out the graphitization at a predetermined bulk density in the process of preparing the specific composite particles, without molding before the graphitization, for example, in a block shape, and without a crushing process after the graphitization; or carrying out the crushing in a weak force even when the graphitization is conducted after a molding.

(Degree of Graphitization)

The specific composite particles preferably have a degree of graphitization of from 93.0 to 98.0%, more preferably from 93.5 to 97.0%, and may have a degree of graphitization of from 94.0% to 96.0%, as measured by an X-ray diffraction method. When the degree of graphitization is 98.0% or less, the specific composite particles tend to have a high hardness, which leads to formation of elastic particles that are less compressible upon applying pressure. Accordingly, the liquid permeation property of the electrolytic solution tends to be more favorably maintained. When the degree of graphitization is 93.0% or more, the specific composite particles tend to have an excellent discharge capacity.

The degree of graphitization can be measured as follows, for example.

60 parts by mass of the specific composite particles and 40 parts by mass of silicon powder (e.g., Fujifilm Wako Pure Chemical Corporation, purity 99.9%) are mixed in an agate mortar for 5 minutes, and the obtained mixture is placed in a cell for X-ray diffraction measurement. Using an X-ray diffractometer (e.g., an X-ray diffractometer manufactured by Rigaku Corporation, X-RAY DIFFRACTIOMETER MultiFlex), the diffraction angle corresponding to the (002) plane of graphite and the diffraction angle corresponding to the (111) plane of silicon are measured by X-ray diffraction measurement using a CuKa ray ($2\theta = 25°$ to 29°).

The correct diffraction angle of graphite is obtained by correcting the observed diffraction angles of silicon and graphite using the theoretical diffraction angle of Si ($2\theta = 28.442°$).

The interplanar spacing (Å) of the d(002) plane of the negative electrode material is calculated using Bragg's equation ($2d\sin\theta = n\lambda$), and the degree of graphitization is calculated by the following equation.

$$\text{Degree of graphitization} = [(3.44 - \text{interplanar spacing})/(0.086)] \times 100$$

(Average Interplanar Spacing ($d_{002}$))

The specific composite particles preferably have an average interplanar spacing ($d_{002}$) of 0.33557 nm or more, more preferably 0.33566 nm or more, and further preferably 0.33574 nm or more, the interplanar spacing being obtained by the X-ray diffraction method. The theoretical value of the average interplanar spacing ($d_{002}$) of a graphite crystal is 0.3354 nm, and the closer the average interplanar spacing ($d_{002}$) is to this value, the more advanced the graphitization is. When the average interplanar spacing ($d_{002}$) is 0.33557 nm or more, the graphitization is not too advanced, and therefore, the particles have a relatively high hardness. Accordingly, the path of the electrolytic solution tends to be favorably maintained even after pressure is applied in the process of fabricating a negative electrode.

From the viewpoint of initial charge/discharge efficiency and energy density of the lithium-ion secondary battery, the average interplanar spacing ($d_{002}$) is preferably 0.33600 nm or less, more preferably 0.33596 nm or less, and further preferably 0.33592 nm or less.

From the foregoing viewpoints, the average interplanar spacing ($d_{002}$) is preferably from 0.33557 to 0.33600 nm, more preferably from 0.33566 to 0.33596 nm, and further preferably from 0.33574 to 0.33592 nm.

The average interplanar spacing ($d_{002}$) can be calculated using Bragg's equation based on the diffraction peak corresponding to the 002 plane of carbon, which appears around the diffraction angle $2\theta$ of 24° to 27° in a diffraction profile obtained by irradiating the test sample with an X-ray (CuKa ray) and carrying out the measurement on the diffraction lines with a goniometer. The measurement of the average interplanar spacing ($d_{002}$) can be performed under the following conditions.

Radiation source: CuKa ray (wavelength = 0.15418 nm)
Output: 40 kV, 20 mA
Sampling width: 0.010°
Scanning range: 10° to 35°
Scanning speed: 0.5°/ min
Bragg's equation: $2d\sin\theta = n\lambda$

Here, d represents the length of a cycle; $\theta$ represents the diffraction angle; n represents the order of reflection; and $\lambda$ represents the wavelength of the X-ray.

The value of the average interplanar spacing ($d_{002}$) of the specific composite particles tends to become smaller by increasing the temperature of the heat treatment and increasing the retention period in the process of producing the composite particles. Accordingly, the average interplanar spacing ($d_{002}$) can be controlled by adjusting the temperature or retention time of the heat treatment in the process of producing the specific composite particles.

(R value Measured by Raman Spectroscopy)

In the specific composite particles, the R value measured by Raman Spectroscopy (hereinafter, also referred to as "R value") is not particularly limited.

In an aspect, in the case in which low-crystalline carbon is not disposed on the surface of the specific composite particles, the R value is preferably 0.20 or less, and from the viewpoint of high durability, the R value is more preferably 0.15 or less, and further preferably 0.10 or less. The R value may be 0.03 or higher, 0.04 or higher, or 0.05 or higher. When the R value is 0.03 or higher, lithium ions tend to be easily intercalated into the graphite crystals, whereby the charge characteristics tend to be improved, and further, generation of lithium dendrite tends to be suppressed.

In another aspect, in the case in which low-crystalline carbon is disposed on at least a part of the surface of the specific composite particles, the R value is preferably 0.50 or less, and from the viewpoint of high-temperature durability, the R value is more preferably 0.40 or less, and further preferably 0.30 or less. In this case, the R value may be in the range of from 0.20 to 0.50, from 0.20 to 0.40, or from 0.20 to 0.30. When the R value is within the range of from 0.20 to 0.50, lithium ions tend to be easily desolvated, and further, low-temperature charging characteristics tend to be improved owing to increased lithium intercalation points.

Conventional particles such as those in which low-crystalline carbon is disposed on the surface of spherical natural graphite tend to be easily compressed by the internal spaces of the particles being compressed during the pressing, since the surface of the particles are covered while the particles have a relatively large amount of spaces therein. This deformation tends to lead to formation of cracks on the coating layer (i.e., the low-crystalline carbon layer on the surface) and exposure of the graphite core. On the other hand, in the specific composite particles, in which the amount of the spaces between the primary particles is relatively small, since the amount of the spaces that are compressed during the pressing is small, cracks of the coating layer that result therefrom are less likely to be formed. As a result, the specific surface area of exposed particles tends to be reduced, and since the interface to the electrolytic solution is small, influence of the electrolytic solution can be reduced. In the case in which low-crystalline carbon is disposed on at least a part of the surface of the specific composite particles, the R value is preferably 0.30 or less, taking into account of the increase in the R value by the pressing.

The R value by Raman spectroscopy can be obtained by the above-described method.

In the case in which the negative electrode material according to the present disclosure is a mixture of the specific composite particles and particles other than the specific composite particles, the details of the average particle size, particle size distribution D90/D10, standard deviation of the particle size distribution, specific surface area, oil absorption, saturated tap density, press pressure, springback amount, peak intensity ratio of the rhombohedral crystal structure, degree of graphitization, average interplanar spacing (d002), and R value by Raman spectroscopy, in connection with the above-described specific composite particles can be similarly adopted to the properties of the negative electrode material as a whole.

[Method of Producing Negative Electrode Material]

In an embodiment, a method of producing a negative electrode material according to the present disclosure include, in this order:

(A) mixing plural flat graphitizable aggregates with a binder to obtain a mixture;
(B) processing the mixture to produce secondary particles, each of the secondary particles having a structure in which the plural flat graphitizable aggregates are stacked; and
(C) graphitizing the secondary particles to obtain composite particles (specific composite particles), each of the composite particles having a structure in which plural flat graphite particles are stacked.

The above-described negative electrode material for a lithium-ion secondary battery may be produced by the method of producing a negative electrode material according to the present disclosure. For the details of the negative electrode material produced by the method of producing a negative electrode material according to the present disclosure, the above-described details of the negative electrode material for a lithium-ion secondary battery can be adopted.

In another embodiment, the method of producing a negative electrode material may include, before the process of obtaining a mixture in the process (A), a process of classifying plural flat graphitizable aggregates and removing at least one selected from the group consisting of fine particles and coarse particles. By removing fine particles by classifying the graphitizable aggregates before forming a composite of the primary particles, the specific composite particles tend to form a dense stacked structure, whereby the specific surface area tends to be reduced.

In another embodiment, the method of producing a negative electrode may include, after the process of obtaining the composite particles in the process (C), a process of classifying the composite particles and removing at least one selected from the group consisting of fine particles and coarse particles. It is presumed that, by the classification of the specific composite particles, variation in the particle size of the specific composite particles can be suppressed, and the path of the electrolytic solution can be more favorably maintained.

Therefore, in a preferable embodiment, the method of producing a negative electrode material according to the present disclosure include, in this order:

(a) optionally, classifying plural flat graphitizable aggregates and removing at least one selected from the group consisting of fine particles and coarse particles;
(b) mixing the plural flat graphitizable aggregates with a binder to obtain a mixture;
(c) processing the mixture to produce secondary particles, each of the secondary particles having a structure in which the plural flat graphitizable aggregates are stacked;
(d) graphitizing the secondary particles to obtain composite particles (specific composite particles), each of the composite particles having a structure in which plural flat graphite particles are stacked; and
(e) optionally, classifying the composite particles and removing at least one selected from the group consisting of fine particles and coarse particles.

In the present disclosure, the "fine particles" refer to particles having a smaller particle size than the particles collected by the classification, and the "coarse particles" refer to particles having a larger particle size than the particles collected by the classification.

Hereinafter, each process that may be included in the method of producing a negative electrode material according to the present disclosure will be described in detail.

[(a) Classifying plural flat graphitizable aggregates and removing at least one selected from the group consisting of fine particles and coarse particles]

For the plural flat graphitizable aggregates, classification may be performed before the compositing to remove at least one selected from fine particles and coarse particles. By removing at least one selected from fine particles and coarse particles from the aggregates, the composite particles tend to form a dense stacked structure, whereby the specific surface area tends to be reduced. By the classification, the particle size distribution D90/D10 of the plural flat graphitizable aggregates may be adjusted to the foregoing ranges, for example, from 2.0 to 4.4, preferably from 2.0 to 4.0, and more preferably from 2.0 to 3.5.

The graphitizable aggregates are not particularly limited as long as they are flat particles, and examples thereof include petrol or coal-based coke, such as fluid coke, needle coke, or mosaic coke. For example, needle coke easily forms a flake shape owing to its high crystallinity, whereby stacked particles tend to be easily obtained. Further, needle coke tends to have a large particle size owing to its high crystallinity, whereby the paritlce size can be easily controlled by pulverization and classification. In a case in which it is desired to obtain lower crystalline graphite having a good charge characteristics, semi-needle coke, which is closer to mosaic-based coke, or mosaic coke may be utilized. In this case, fine particles and coarse particles tend to be generated easily, and thereore, it is preferable that removal of fine particles and coarse particles is sufficiently performed by the classification control.

In the classification, for example, it is preferable that fine parcicles having a particle size of 1 μm or less are removed; it is more preferable that fine particles having a particle size of 2 μm or less are removed; and it is further preferable that fine particles having a particle size of 3 μm or less are removed.

Further, in the classification, for example, it is preferable that coarse parcicles having a particle size of 60 μm or more are removed; it is more preferable that coarse parcicles having a particle size of 50 μm or more are removed; and it is further preferable that coarse parcicles having a particle size of 40 μm or more are removed. The removed particles may be crushed and utilized again as a raw material.

The method of classification is not partcularly limited, and examples thereof include classification using a sieve, classification using an air flow-type centrifuge, and a precision air flow classifying machine using the Coanda effect.

[(b) Mixing the plural flat graphitizable aggregates with a binder to obtain a mixture]

For the binder, a graphitizable binder is used. Examples of the binder include coal-based, petroleum-based, or artificial pitch or tar, a thermoplastic resin, a thermosetting resin and the like.

Further, if necessary, a graphitization catalyst, a fluidity imparting agent and the like may be added.

Examples of the graphitization catalyst include a substance having a graphitization catalytic function, such as silicon, iron, nickel, titanium, boron, vanadium, or aluminum; a carbide, an oxide, or a nitride thereof; and a mica clay mineral.

The amount of the graphitization catalyst is not particularly limited, as long as a desired substance is obtained. From the viewpoint of suppressing excessive graphitization, it is preferable that no graphitization catalyst is blended, or that the blending amount is minimized. For example, in a case in which the graphitization catalyst is silicon carbide (SiC), the amount of the silicon carbide is preferably 5% by mass or less, and more preferably 3% by mass or less, with respect to the mass of the graphitizable aggregates.

The mixing method is not particularly limited. From the viewpoint of reducing the amount of pores in the secondary particles, a mixing method in which shearing force is minimized, for example, a mixing method using a kiln-type mixer, a paddle stirrer or the like, is preferable. It is preferable that a kneader that involves kneading, which is called a kneading machine, for example, is not used.

[(c) Processing the mixture to produce secondary particles, each of the secondary particles having a structure in which the plural flat graphitizable aggregates are stacked]

The method for processing the mixture is not particularly limited. In an embodiment, the processing may be performed by heating the mixture to volatilize the volatile component of the binder. The heating temperature is preferably 400°C or lower. When the heating temperature is 400°C or lower, fine pores caused by oxidative combustion tend to be reduced, whereby particles having a small specific surface area tend to be obtained. In this case, by heating the mixture while allowing the mixture to flow using a stirrer or the like, the particles tend to be preferably formed.

In heating the mixture, the pressure of the atmosphere may be reduced. By reducing the pressure of the athosphere, the graphitizable aggregates tend to be impregnated with the binder more easily, whereby the spaces between the particles are filled, and stacked particles having only a small amount of inner pores tend to be obtained.

Hereinafter, specific examples of the method for producing the secondary particles will be described.

A mixture of graphitizable aggregates and a binder is slowly stirred and mixed at a temperature above the softening point of the binder, preferably within a temperature range in which volatile component(s) are vaporized, until the volatile component(s) are removed. By slowly performing degassing before the graphitization (calcination), generation of air bubbles during the calcination of the crystals is reduced, whereby the amount of pores inside and on the surface of the particles becomes small, and a hard structural body having a small specific surface area and having excellent high-temperature resistance tends to be obtained. In this process, for the sake of good safety, it is preferable that inert gas such as nitrogen is introduced into the mixer to control the oxygen concentration to 15% or less to prevent volatile gas from being ignited. Further, it is preferable that the temperature inside the mixer is 400°C or lower, since fine pores caused by oxidative combustion tend to be reduced, whereby particles having a small specific surface area tend to be easily obtained. In addition, in a case in which pitch is used as a binder, pitch can become infusible by incorporating oxygen in the atmosphere. This enables favorable crystal development during the graphitization, whereby a denser crystal body with higher crystallinity can be obtain.

Degassing, infusibilization and depressurization, under the environment in which the flowability of the gas phase and the liquid phase in which the binder is softened is secured, tend to lead to a higher effect.

[Graphitizing the secondary particles to obtain composite particles (specific composite particles), each of the composite particles having a structure in which plural flat graphite particles are stacked]

In this process, the obtained secondary particles are graphitized. This process graphitizes graphitizable component(s) in the secondary particles. The graphitization is preferably performed in an atmosphere in which the mixture is hardly oxidized, and for example, the graphitization may be performed by heating the particles under nitrogen atmosphere or argon gas. The temperature of the graphitization is not particularly limited as long as the graphitizable component can be graphitized. For example, the temperature may be 2000°C or higher, 2500°C or higher, 2800°C or higher, or 3000°C or higher. The upper limit of the temperature is not particularly limited as long as the graphite does not sublimate, and for example, the temperature may be 3200°C or lower. The temperature of 2000°C or higher causes the change in the crystals. The temperature of 2500°C or higher leads to favorable graphite crystal development, and the temperature of 2800°C or higher leads to the development of the crystals to high-capacity graphite crystals capable of intercalate a large amount of lithium ions, whereby the amount of the graphitization catalyst remaining after the calcination tends to be reduced and increase in the ash amount tends to be suppressed. In any of these cases, the charge/discharge capacity and cycle characteristics of the battery tend to be improved. On the other hand, when the temperature of the graphitization is 3200°C or lower, sublimation of a part of the graphite can be suppressed.

In this process, the degree of graphitization may be adjusted to 98.0% or less, preferably 97.0% or less, and more preferably 96.0% or less.

The method of producing a negative electrode material according to the present disclosure may include a process of molding the secondary particles before the graphitization, and a process of crushing the molded body after the graphitization. The molding of the secondary particles increases the bulk density and consequently the amount fed to the graphitization oven, whereby the energy efficiency is increased and the graphitization can be performed with reduced energy. The method for the molding is not particularly limited, and for example, the secondary particles may be compressed in a container such as a mold.

On the other hand, the method of producing a negative electrode material according to the present disclosure also preferably does not include a process of molding the secondary particles before the graphitization. The method of producing a negative electrode material according to the present disclosure preferably does not include a process of molding the secondary particles before the graphitization and therefore does not include a process of crushing the molded body. It is presumed that this enables suppressing the increase in the rhombohedral crystals during the process of the molding (e.g., in a block shape) and the crushing, whereby the high-temperature resistance can be further favorably improved.

The bulk density of the secondary particles upon being subjected to the graphitization (i.e., immedeately before being subjected to the graphitization) is preferably from 0.4 to 1.0 g/cm$^3$, more preferably from 0.6 to 1.0 g/cm$^3$, and further preferably from 0.8 to 1.0 g/cm$^3$. When the secondary particles before the graphitization has a bulk density of 0.4 g/cm$^3$ or more, dense composite particles tend to be obtained after the graphitization owing to the small amount of spaces inside the particles. When the secondary particles have a bulk density of 1.0 g/cm$^3$ or less, in the case in which the molding (e.g., in a block shape) and the crushing is conducted, the crushing can be conducted with a weak force, whreby the increase in the rhombohedral crystals tends to be suppressed.

In the present disclosure, the bulk density of particles can be determined by a weight measurement method. That is, the bulk density of particles can be determined by deviding the bulk volume by the mass of the particles in the air. Here, the mass of the particles refers to the mass excluding the graphitization catalyst (e.g., in a case in which the secondary particles are mixed secondary particles of aggregates, a binder and a graphitization catalyst, the total mass of the aggregates and the binder, excluding the volatile component).

[(e) Classifying the composite particles and removing at least one selected from the group consisting of fine particles and coarse particles]

The obtained composite particles may be classified to remove at least one selected from the group consisting of fine particles and coarse particles. It is presumed that this enables obtaining composite particles having a less varied particle size, whereby the path of the electrolytic solution can be maintained more favorably. The particle size distribution D90/D10 of the composite particles may be adjusted by classification within the above-described ranges, for example, from 2.0 to 5.0, preferably from 2.0 to 4.0, and further preferably from 2.0 to 3.0.

The method of classification is not partcularly limited, and examples thereof include classification using a sieve, classification using an air flow-type centrifuge, and a precision air flow classifying machine using the Coanda effect.

In this process, in the case in which fine particles are removed, for example, it is preferable that fine parcicles having a particle size of 1 $\mu$m or less are removed; it is more preferable that fine particles having a particle size of 2 $\mu$m or less are removed; and it is further preferable that fine particles having a particle size of 3 $\mu$m or less are removed.

In this process, in the case in which coarse particles are removed, for example, it is preferable that coarse parcicles having a particle size of 60 $\mu$m or more are removed; it is more preferable that coarse parcicles having a particle size of 50 $\mu$m or more are removed; and it is further preferable that coarse parcicles having a particle size of 40 $\mu$m or more are removed.

[Other Processes]

The method of producing a negative electrode material according to the present disclosure may include a process other than those described above.

For example, the method of producing a negative electrode may include a process of heat-treating the secondary particles with an organic compound attached to the surface thereto after the graphitization. By heat-treating the secondary particles with an organic compound attached to the surface thereof, the organic compound attached to the surface changes into low-crystalline carbon. This enables disposing low-crystalline carbon on at least a part of the surface of the composite particles.

The method of attaching an organic compound to the surface of the secondary particles is not particularly limited. Examples thereof include: a wet method in which the secondary particles are dispersed and mixed in a mixed solution containing the organic compound dissolved or dispersed in a solvent, after which the solvent is removed to attach the organic compound; and a dry method in which a mechanical force is applied to a mixture obtained by mixing the secondary particles and a solid organic compound to attach the organic compound.

The organic compound is not particularly limited as long as it is a compound that changes into low-crystalline carbon by heat treatment (carbon precursor). Examples thereof include petroleum-based pitch, naphthalene, anthracene, phenanthroline, coal tar, a phenol resin, and polyvinyl alcohol. One type of the organic compound may be used singly, or two or more types thereof may be used in combination.

The temperature of the heat treatment at the time of heat-treating the secondary particles with an organic compound attached to the surface thereof is not particlualy limited, as long as it is a temperature at which the organic compound attached to the surface of the secondary particles changes into low-crystallin carbon. For example, the temperature is preferably from 400°C to 1500°C. The heat treatment is preferably performed in an inert gas atmosphere such as in a nitrogen atmosphere.

As described above, the specific composite particles contained in the negative electrode material according to the present application do not need to have low-crystalline carbon disposed on the surface thereof, and therefore, the method of producing a negative electrode according to the present disclosure does not need to include a step of heat-treating the secondary particles with an organic compound attached to the surface thereof.

[Negative Electrode for Lithium-Ion Secondary Battery]

The negative electrode for a lithium-ion secondary battery according to the present disclosure includes: a negative electrode material layer including the negative electrode material for a lithium-ion secondary battery according to the present disclosure; and a current collector. The negative electrode for a lithium-ion secondary battery may include other component(s) in addition to the negative electrode material layer including the negative electrode material for a lithium-ion secondary battery according to the present disclosure and a current collector, as necessary.

The negative electrode for a lithium-ion secondary battery can be produced, for example, by kneading a negative electrode material for a lithium-ion secondary battery and a binder together with a solvent to prepare a slurry of a negative electrode material composition for a lithium-ion secondary battery, and applying the slurry to a current collector to form a negative electrode material layer, or by forming a negative electrode material composition for a lithium-ion secondary battery in a form of a sheet or pellet and integrate it with a current collector. The kneading can be performed by a dispersing device, such as a disper stirrer or a planetary kneader.

The binder used for preparing the negative electrode material composition for a lithium-ion secondary battery is not particularly limited. Examples of the binder include: a styrene-butadiene copolymer (SBR); a homopolymer or copolymer of ethylenically unsaturated carboxylic acid ester, such as methyl acrylate, methyl methacrylate, ethyl acrylate, ethyl methacrylate, butyl acrylate, butyl methacrylate, hydroxyethyl acrylate, or hydroxyethyl methacrylate, or an ethylenically unsaturated carboxylic acid, such as acrylic acid, methacrylic acid, itaconic acid, fumaric acid, and maleic acid; a polymeric compound having high ionic conductivity, such as polyvinylidene fluoride, polyethylene oxide, polyepichlorohydrin, polyphosphazene, polyacrylonitrile, or polymethacrylonitrile. When the negative electrode material composition for a lithium-ion secondary battery contains a binder, the amount of the binder is not particularly limited. For example, the amount may be from 0.5 to 20 parts by mass with respect to 100 parts by mass in total of the binder and the negative electrode material for a lithium-ion secondary battery.

The negative electrode material composition for a lithium-ion secondary battery may contain a thickener. Examples of the thickener include carboxymethyl cellulose, methyl cellulose, hydroxymethyl cellulose, ethyl cellulose, polyvinyl alcohol, polyacrylic acid or a salt thereof, oxidized starch, phosphorylated starch, and casein. When the negative electrode material composition for a lithium-ion secondary battery contains a thickener, the amount of the thickener is not particularly limited. For example, the amount may be from 0.1 to 5 parts by mass with respect to 100 parts by mass of the negative electrode material for a lithium-ion secondary battery.

The negative electrode material composition for a lithium-ion secondary battery may contain a conductive aid. Examples of the conductive aid include: a carbon material, such as carbon black, graphite, or acetylene black; and an inorganic compound, such as an oxide that exhibits conductivity or a nitride that exhibits conductivity. When the negative electrode material composition for a lithium-ion secondary battery contains a conductive aid, the amount of the conductive aid is not particularly limited. For example, the amount may be from 0.5 to 15 parts by mass with respect to 100 parts by mass of the negative electrode material for a lithium-ion secondary battery.

The material for the current collector is not particularly limited, and may be selected from aluminum, copper, nickel, thitanium, stainless steel and the like. The form of the current collector is not particularly limited, and may be selected from a foil, a perforated foil, a mesh and the like. Further, a porous material, such as a porous metal (foamed metal), a carbon paper, or the like may also be used for a current collector.

In the case in which the negative electrode material composition for a lithium-ion secondary battery is applied to a current collector to form a negative electrode material layer, the method thereof is not particularly limtied, and a known method, such as a metal mask printing method, an electrostatic coating method, a dip coating method, a spray coating method, a roll coating method, a doctor blade method, a comma coating method, a gravure coating method, or a screen printing method, may be adopted. After the application of the negative electrode material composition for a lithium-ion secondary battery to the current collector, the solvent contained in the negative electrode material composition for a lithium-ion secondary battery is removed by drying. The drying may be performed using, for example, a hot air dryer, an infrared dryer, or a combination of these devices. If necessary, rolling treatment may be performed on the negative electrode material layer. The rolling treatment can be performed by a method such as using a flat plate press, a calender roll or the like.

In the case in which the negative electrode material composition for a lithium-ion secondary battery formed in a shape of a sheet, pellet or the like is integrated with a current collector to form a negative electrode material layer, the method for the integration is not particularly limited. For example, the integration can be performed using a roll, a flat plate press, or a combination of these means. The pressure applied upon the integration of the current collector and the negative electrode material composition for a lithium-ion secondary battery is, for example, preferably from around 1 to 200 MPa.

The negative electrode density of the negative electrode material layer is not particularly limited. For example, the negative electrode density is preferably from 1.1 to 1.8 $g/cm^3$, more preferably from 1.1 to 1.7 $g/cm^3$, and further preferably from 1.1 to 1.6 $g/cm^3$. When the negative electrode density is 1.1 $g/cm^3$ or more, increase in electric resistance tends to be suppressed, whereby the capacity tends to be increased. When the negative electrode density is 1.8 $g/cm^3$ or less, deterioration in input characteristics and cycle characteristics tends to be suppressed.

[Lithium-Ion Secondary Battery]

The lithium-ion secondary battery according to the present disclosure includes: the negative electrode for a lithium-ion secondary battery according to the present disclosure; a positive electrode; and an electrolytic solution.

The positive electrode can be obtained by forming a positive electrode material layer on a current collector in a similar manner to the method of producing a negative electrode described above. Examples of the current collector include those obtained by forming a metal or a metal alloy of aluminum, titanium or stainless steel in a shape of a foil, a perforated foil, a mesh or the like.

The positive electrode material used for forming the positive electrode material layer is not particularly limited. Examples of the positive electrode material include a metallic compound (e.g., a metal oxide, a metal sulfide, etc.) and a conductive polymeric material that are capable of accomodating lithium-ion doping or intercalation. More specific examples include: a metal compound, such as lithium cobaltate ($LiCoO_2$), lithium nickelate ($LiNiO_2$), lithium manganate ($LiMnO_2$), a composite oxide thereof ($LiCo_xNi_yMn_zO_2$, $x + y + z = 1$), a double oxide containing an additional element M' ($LiCo_aNi_b Mn_cM'_dO_2$, $a + b + c + d = 1$, M ': Al, Mg, Ti, Zr or Ge), spinel-type lithium manganese oxide ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivin-type $LiMPO_4$ (M: Co, Ni, Mn, or Fe); a conductive polymer, such as polyacetylene, polyaniline, polypyrrole, polythiophene, or polyacene; a porous carbon; and the like. One type of the positive electrode material may be used singly, or two or more types thereof may be used.

The electrolytic solution is not particularly limited, and those in which a lithium salt as an electrolyte is dissolved in a non-aqueous solvent (a so-called organic electrolytic solution) may be used, for example.

Examples of the lithium salt include $LiClO_4$, $LiPF_6$, $LiAsF_6$, $LiBF_4$, and $LiSO_3CF_3$. One type of the lithium salt may be used singly, or two or more types thereof may be used.

Examples of the non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propanesulton, 3-methylsulfolane, 2,4-dimethylsulfolane, 3-methyl-1,3-oxazolidine-2-one, $\gamma$-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethylphosphate ester, and triethylphosphate ester. One type of the non-aqueous solvent may be used singly, or two or more types thereof may be used.

The form of the positive electrode and the negative electrode in the lithium-ion secondary battery is not particularly limited. For example, the positive electrode, the negative electrode, and an optional separator disposed between the positive electrode and the negative electrode may be spirally wound, or laminated as a flat plate.

The separator is not particularly limited, and for example, a nonwoven fabric, a cloth, a microporous film, or a combination thereof, made of a resin, may be used. Examples of the resin include those containing a polyolefin, such as polyethylene or polypropylene, as a main component. In a case in which the lithium-ion secondary battery has a structure in which the positive electrode and a negative electrode do not contact each other directly, the separator does not need to be used.

The shape of the lithium-ion secondary battery is not particularly limited. Examples include a laminated battery, a paper battery, a button battery, a coin battery, a stacked battery, a cylindrical battery, and a square battery.

The lithium-ion secondary battery according to the present disclosure is suitable as a lithium-ion secondary battery having a large capacity used for input characteristics, electric vehicles, power tools, power storage devices and the like. In particular, since the lithium-ion secondary battery according to the present disclosure has an excellent high-temperature resistance, it is suitable as a lithium-ion secondary battery used for commercial vehicles such as buses and courier delivery vehicles.

Examples

Hereinafter, the present disclosure will be described in detail below by way of Examples. However, the invention is not limited to these Examples.

[Production or Preparation of Negative Electrode Material]

[Example 1]

So-called needle-type petroleum-derived coke (needle coke), in which needle-like striped patterns are observed in the entire region when the cross-section of the particles is observed using a polarized-light microscope, and in which the sulfur content is 0.5% by mass or less, the nitrogen content is 0.5% by mass or less, and the fixed-carbon content is 98% by mass or more, was selected, and coarsely crushed with a hummer-type mill. The coarsely crushed product was sieved using a sieve having a mesh size of 3 mm, after which the screened product was sieved using a sieve having a mesh size of 1 mm, whereby granules having a particle size of 1 to 3 mm were collected. Next, the obtained granules were ground with a roller mill to obtain particles having an average particle size of 200 $\mu$m.

The obtained particles were ground using a counter jet mill at a grinding pressure of 6 kgf/cm$^2$, after which the coarse powder portion was removed at a classification rotation speed of 900 revolutions per minute (rpm), to obtain ground particles having a particle size D90 of 23 $\mu$m or less. Next, classification was performed to obtain particles having a particle size D10 of 7 $\mu$m or more using a high-speed spiral flow classifier, whereby flat coke particles, which is a graphitizable aggregate, was obtained. The volume-based particle size distribution of the obtained flat coke particles was measured, confirming that D10 was 7 $\mu$m and D90 was 23 $\mu$m.

A mixture was obtained by homogeneously mixing 90% by mass of the obtained flat coke particles and 10% by mass of coal tar pitch (softening point: 100 to 150°C, quinoline insoluble content: 15% by mass or less, fixed carbon content: 55 to 75% by mass) at room temperature. Next, the content of the mixing container containing the mixture was heated at 300 to 400°C under a mixed gas flow of dry air and nitrogen, and the pressure was reduced. In this process, the specific surface area tends to decrease if the stirring blades in the mixer is moved to facilitate the discharge of the gas. The end point of the heating and stirring was determined as a point at which the current value of the stirring blades was lowered and stabilized, based on the phenomenon that low molecular gases in the coal tar pitch volatilize and the viscosity of the mixture decreases, and specifically formed particles having a bulk density of 0.88 g/cm$^3$ were obtained.

Next, the formed particles were packed in a graphitization container and subjected to graphitization at 3100°C.

Thereafter, the obtained particles were sieved using a 300 mesh net to obtain flat particle composite particles of Example 1.

[Example 2]

Composite particles 2 of Example 2 were obtained in the same manner as in Example 1, except that the classification rotation speed of the counter jet mill was changed to 1000 revolutions per minute (rpm) to remove the coarse powder portion, which was followed by classification using the high-speed spiral flow classifier to obtain particles having a particle size D10 of 5 $\mu$m and D90 of 20 $\mu$m.

[Example 3]

Composite particles 3 of Example 3 were obtained in the same manner as in Example 2, except that the classification rotation speed of the counter jet mill was changed to 750 revolutions per minute (rpm) to remove the coarse powder portion, to obtain ground powder having a particle size D10 of 7 $\mu$m and D90 or 30 $\mu$m.

[Comparative Example 1]

Mosaic coke (55 parts by mass) that had been ground to an average particle size of 15 $\mu$m, a tar pitch binder having a softening point of 110°C (25 parts by mass), and SiC (20 parts by mass) as a catalyst, were kneaded at 130°C, which is higher than the temperature at which the binder melts, with a heated kneader, to obtain a mixture in which irregularly-oriented flat particles were gathered. Next, the obtained mixture was extrusion-molded to obtain a molded body. The molded body was graphitized by a heat treatment to the maximum temperature of 2500°C. The obtained graphitized product was ground and sieved to obtain secondary graphite particles having an average particle size of 23.0 $\mu$m.

[Comparative Example 2]

Spherical natural graphite having an average particle size of 17 $\mu$m was prepared.

[Comparative Example 3]

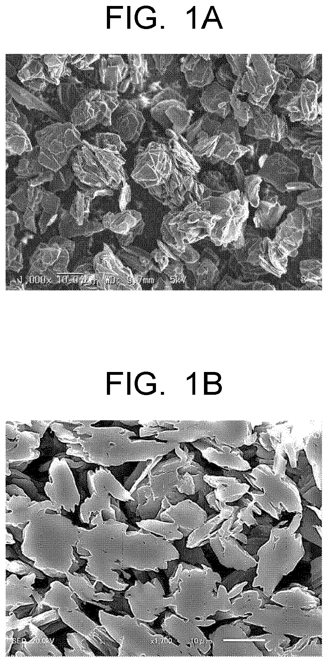

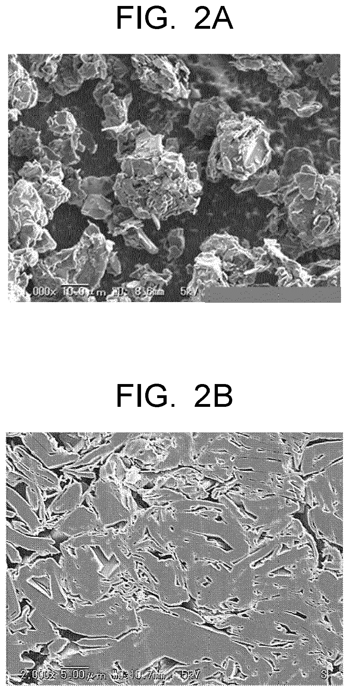

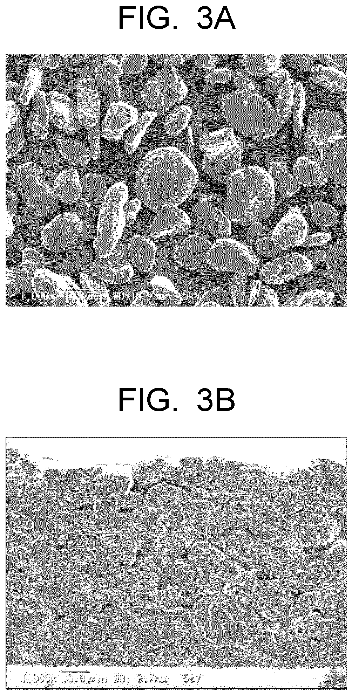

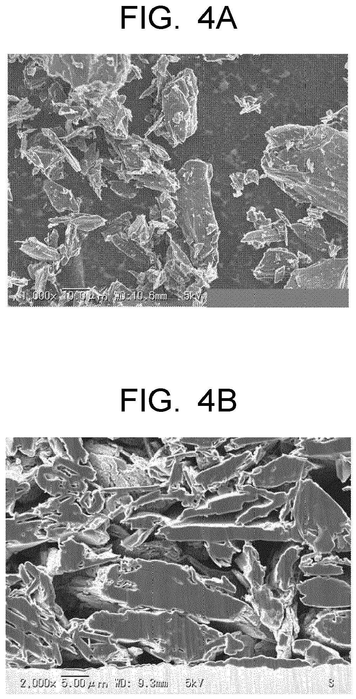

Needle coke was coarsely crushed with a hammer mill in the same manner as in Example 1. Next, flake-shaped ground powder, including fine particles and coarse particles, was obtained through a roller mill for grinding. It was confirmed that the flat particles had a D10 of 6 $\mu$m and D90 of 55 $\mu$m, and that the cumulative volume % of particles having a size of 3 $\mu$m or less was 3% or more, indicating that a large amount of fine particles were contained (note that the cumulative volume % of particles having a size of 3 $\mu$m or less in all of Examples 1 to 3 are 0.1% or less). 90% by mass of these flat coke particles and 10% by mass of coal tar pitch (softening point: 100 to 150°C, quinoline-insoluble content: 15% by mass or less, fixed carbon amount: 55 to 75% by mass) were homogenously mixed at ambient temperature to obtain a mixture. Then, a graphite case was filled with the mixture, sealed, and steam-fired at 1000°C. Next, graphitization was performed at 3100°C, followed by sieving the particles with a 300 mesh net to obtain flat artificial graphite particles of Comparative Example 3 having an average particle size of 27.0 $\mu$m.
The appearance and cross-section of the negative electrode materials of the Examples and Comparative Examples were observed with an electron microscope. It was confirmed that the negative electrode materials produced in Examples 1 to 3 had a structure in which flat graphite particles were stacked. It was confirmed that the negative electrode material produced in Comparative Example 1 contained particles in which plural flat graphite particles were gathered or bound together such that the flat graphite particles had non-parallel orientation planes. It was confirmed that the flat artificial graphite particles produced in Comparative Example 3 were flat (flake) primary particles. Further, it was observed that the negative electrode materials produced in Examples 1 to 3 had a smaller amount of pores as compared to the negative electrode materials of Comparative Examples 1 and 2. Electron microscope images of the appearance and cross-section of the negative electrode material of Example 1 is shown in Figs. 1A and 1B, respectively. Electron microscope images of the appearance and cross-section of the negative electrode material of Comparative Example 1 is shown in Figs. 2A and 2B, respectively. Electron microscope images of the appearance and cross-section of Comparative Example 2 are shown in Figs. 3A and 3B, respectively. Electron microscope images of the appearance and cross-section of the negative electrode material of Comparative Example 3 are shown in Figs. 4A and 4B, respectively. Here, the cross-sectional image of the negative electrode material of Comparative Example 1 shown in Fig. 2B is a cross-sectional image obtained after the negative electrode material had been pressed to have a density of 1.65 g/cm$^3$, and the other microscope images show the state of the negative electrode materials that had not been pressed.

[Fabrication of Negative Electrode for Lithium-Ion Secondary Battery]

Each of the negative electrode materials of the Examples and Comparative Examples (97.6 parts by mass), carboxymethyl cellulose (CMC) (1.2 parts by mass), and a styrene-butadiene rubber (SBR) (1.2 parts by mass) were kneaded to prepare a slurry. This slurry was applied to a gloss surface of an electrolytic copper foil in an application amount of 10 g/cm$^2$, pre-dried at 90°C for 2 hours, and adjusted to have an electrode density of 1.65 g/cm$^3$ with a roll press. Thereafter, curing process was carried out at 120°C for 4 hours in a vacuum atmosphere to obtain a negative electrode for a lithium-ion secondary battery.

[Fabrication of Lithium-ion Secondary Battery]

A coin cell was prepared using the electrode obtained above as a negative electrode, metal lithium as a counter electrode, a mixed solution of ethylene carbonate/ethylmethyl carbonate (3:7 volume ratio) and vinylene carbonate (VC) (1.0% by mass) containing 1M LiPF$_6$ as an electrolytic solution, a polyethylene micropore membrane having a thickness of 25 $\mu$m as a separator, and a copper plate having a thickness of 250 $\mu$m as a spacer.

[Evaluation of Characteristics of Negative Electrode Material and Battery]

Characteristics of each of the negative electrode materials obtained in the Examples and Comparative Examples, and the negative electrodes and lithium-ion secondary batteries fabricated therefrom, were evaluated by the following methods.

[Average Particle Size, Particle Size Distribution D90/D10, and Standard Deviation of Particle Size Distribution]

Using a laser diffraction particle size distribution analyzer (SALD3100, manufactured by Shimadzu Corporation), the average particle sizes of the primary particles and the negative electrode material were obtained as the particle size (D50) at which the cumulative volume from the small diameter side of a volume-based particle size distribution reached 50%. Further, for the primary particles and the negative electrode material, the particle size distribution D90/D10 was determined, which indicates a ratio of the particle size (D90) at which the cumulative volume from the small diameter side of the volume-based particle size distribution reaches 90% to the particle size (D10) at which the cumulative volume from the small diameter side of the volume-based particle size distribution reaches 10%. In addition, the standard deviation of the particle size distribution was determined by the method described above.

[Specific Surface Area]

To a sample obtained by filling a measurement cell with the negative electrode material and performing heat pretreatment at 200°C while vacuum degassing, nitrogen gas was adsorbed using a gas-adsorption instrument (ASAP2010, manufactured by Shimadzu Corporation). The obtained sample was subjected to BET analysis by a 5-point method to determine the specific surface area.

[Oil Absorption]

Using an absorption tester (S-500, Asahisouken Corporation), linseed oil was applied to 30 g of the negative electrode material with a constant speed buret, and the change in viscosity characteristics was measured using a torque detector. The amount of linseed oil added per 100 g of the negative electrode material that corresponds to the torque of 70% of the maximum torque generated was determined as the oil absorption (mL/100 g).

[Saturated tap density]

100 cm$^3$ of the negative electrode material were placed in a graduated cylinder having a capacity of 150 cm$^3$ (KRS-406 manufactured by Kuramochi Scientific Instruments Co., Ltd), and dropped from a height of 5 cm with the cylinder plugged. The saturation tap density was determined from the mass (g) and volume (cm$^3$) of the negative electrode material. The tapping was repeated until the density was saturated.

[Press Pressure]

A mold having a diameter of 15 mm was filled with 3.0 g of the negative electrode material, and the negative electrode material was compressed with an autograph (manufactured by Shimadzu Corporation) at a constant rate of 10 mm/min. During the compression, the distance from the bottom of the negative electrode material to the pressed surface was measured, and the density during the compression was calculated from the volume of the negative electrode material, obtained by multiplying the foregoing distance by the base area of the mold. In the press hammer, a load cell was attached. The pressure of the pressing ($kN/cm^2$) at the point where the density reached a predetermined density of 1.8 $g/cm^3$ was determined as the press pressure.

[Springback Amount]

The springback amount was obtained by compressing the particles by the method described above using an autograph (manufactured by Shimadzu Corporation), and dividing, by the density of 1.8 $g/cm^3$, the absolute value of the difference between the reference density of 1.8 $g/cm^3$ and the density of the negative electrode material after the springback.

[Peak Intensity Ratio of Rhombohedral Structure]

The peak intensity ratio (P1/P2) of the rhombohedral structure was calculated based on the intensity ratio of the diffraction line of the rhombohedral structure (PI: diffraction angle 43.2°) to the diffraction line of the hexagonal structure (P2: diffraction angle 44.3°) in an X-ray diffraction pattern using a CuKa ray.

[Degree of Graphitization]

The degree of graphitization was measured by the above-described method using an X-ray diffractometer (X-RAY DIFFRACTIOMETER MultiFlex, Rigaku Corporation).

[Average Interplanar Spacing ($d_{002}$)]

The average interplanar spacing ($d_{002}$) was calculated using Bragg's equation based on the diffraction peak corresponding to the 002 plane of carbon, which appears around the diffraction angle $2\theta$ of 24° to 27°, in a diffraction profile obtained by irradiating the test sample with an X-ray (CuKa ray) and carrying out the measurement on the diffraction lines with a goniometer. The measurement of the average interplanar spacing ($d_{002}$) was carried out under the following conditions.

Radiation source: CuKa ray (wavelength = 0.15418 nm)
Output: 40 kV, 20 mA
Sampling width: 0.010°
Scanning range: 10° to 35°
Scanning speed: 0.5°/min
Bragg's equation: $2d\sin\theta = n\lambda$

Here, d represents the length of a cycle; $\theta$ represents the diffraction angle; n represents the order of reflection; and $\lambda$ represents the wavelength of the X-ray.

[R Value Measured by Raman Spectroscopy]

The R value was determined using a Raman spectrometer (NSR-1000 manufactured by JASCO Corporation) under the following conditions.

- Laser wavelength: 532 nm
- Irradiation intensity: 1.5 mW (value measured with a laser power monitor)
- Measurement range: 830 $cm^{-1}$ to 1940 $cm^{-1}$
- Irradiation time: 60 seconds
- Irradiation area : 4 $\mu m^2$
- Baseline: 1050 $cm^{-1}$ to 1750 $cm^{-1}$

[Evaluation of High-Temperature Storage Retention Rate and High-Temperature Storage Recovery Rate]

The fabricated lithium-ion secondary battery was placed in a thermostatic chamber set at 25°C, and was subjected to constant-current charging at a current value of 0.2 C up to the voltage of 0 V (V vs. Li/Li$^+$), followed by constant-voltage charging at 0 V up to the point where the current value reached 0.02 C. After a 30-minute's rest, the battery was subjected to constant-current discharging at a current value of 0.2 C up to the voltage of 1.5 V (V vs. Li/Li⁺). The charging and discharging were repeated twice, after which the battery was subjected to constant-current charging at a current value of 0.2 C up to a voltage of 0 V (V vs. Li/Li⁺), followed by constant-voltage charging at 0 V up to the point where the current value reached 0.02 C. This battery was placed in a thermostatic chamber set at 60°C and stored for 7 days.

After that, the battery was placed in a thermostatic chamber set at 25°C and left stand for 60 minutes, after which the battery was subjected to constant-current discharging at a current value of 0.2 C up to a voltage of 1.5 V (V vs. Li/Li⁺). Next, the charging and discharging were repeated once under the foregoing conditions. The storage at 60°C and the capacity measurement after the storage were repeated three times in total.

The high-temperature storage retention rate and high-temperature storage recovery rate were calculated from the following equations.

$$\text{High-temperature storage retention rate (\%)} = (\text{first discharge capacity at 25°C after storage at 60°C for 21 days}) / (\text{second discharge capacity at 25°C before storage at 60°C}) \times 100$$

$$\text{High-temperature storage recovery rate (\%)} = (\text{second discharge capacity at 25°C after storage at 60°C for 21 days}) / (\text{second discharge capacity at 25°C before storage at 60°C}) \times 100$$

[Liquid Permeation Property]

A negative electrode pressed to an electrode density of 1.65 g/cm³ was punched into a circle of 16 φ, and attached to a glass substrate with a double-sided tape to obtain an undistorted flat electrode surface. On the central portion of this circular electrode, 3 μm of PC (polycarbonate: Kishida Chemical Co., Ltd) were dropped on the center of the negative electrode using a micropipette, and the permeation time until the PC permeated was measured. The same three electrodes were prepared and the measurement was performed three times, the average value of which is shown in Table 1.

[Rapid Charge Capacity Retention Rate]

The negative electrode obtained above was punched into a circle having an electrode area of 2.00 cm², and a 2016-type coin cell was fabricated using an electrode obtained by applying lithium cobaltate to an alminium foil as a positive electrode, a mixed solution of ethylene carbonate/ethylmethyl carbonate (3/7 volume ratio) and vinylene carbonate (0.5% by mass) containing 1.0 M LiPF₆ as an electrolytic solution, a polyethylene micropore membrane having a thickness of 25 μm as a separator, and a spring spacer as a spacer. This coin cell was used as an evaluation cell.

Using the fabricated evaluation cell, aging treatment before a rapid charging test was performed. Specifically, the evaluation cell was placed in a thermostatic chamber kept at 25°C, and was subjected to constant-current charging at 0.92 mA up to 4.2 V, after which the cell was further charged at a constant voltage of 4.2 V until the current attenuated to a value corresponding to 0.046 mA. After the charging, the cell was rested for 10 minutes, and was discharged at 0.92 mA until the voltage reached 2.75 V. The charging and discharging were repeated for 5 cycles.

Using the aging-treated evaluation cell, a rapid charging test was performed. Specifically, the evaluation cell was placed in a thermostatic chamber kept at 25°C, and was subjected to constant-current charging at 0.92 mA up to 4.2 V, and charge capacity (1) was measured. After the charging, the cell was rested for 10 minutes, and was discharged. The discharge was performed at 4.6 mA up to 2.75 V. Further, the cell was subjected to constant-current charging at 6.9 mA up to 4.2 V, and charge capacity (2) was measured. After the charging, the cell was rested for 10 minutes, and was discharged at 4.6 mA until the voltage reached 2.75 V.

The value obtained by dividing the charge capacity (2) by the charge capacity (1) and multiplying it by 100 was determined as the rapid charge capacity retention rate (%).

The evaluation results are shown in Table 1. In Table 1, D10, D50, D90, D90/D10, and the standard deviation of the particle size distribution are values for the negative electrode materials after graphitization.

[Table 1]

| Evaluation | Example 1 | Example 2 | Example 3 | Comparative Example 1 | Comparative Example 2 | Comparative Example 3 |
|---|---|---|---|---|---|---|
| D10 ($\mu$m) | 11 | 7 | 8.5 | 11 | 12 | 7 |
| D50 ($\mu$m) | 18 | 16 | 18 | 23 | 17 | 27 |
| D90 ($\mu$m) | 27 | 24 | 35 | 44 | 22 | 58 |
| D90/D10 | 2.4 | 3.4 | 4.1 | 4.1 | 1.8 | 8.4 |
| Standard deviation of the particle size distribution | 0.16 | 0.19 | 0.23 | 0.24 | 0.12 | 0.39 |
| Specific surface area ($m^2/g$) | 1.4 | 2.0 | 1.0 | 3.2 | 6.7 | 0.9 |
| Oil absorption (mL/100g) | 30 | 35 | 27 | 70 | 50 | 23 |
| Saturated tap density ($g/cm^3$) | 1.02 | 1.14 | 1.19 | 0.80 | 1.03 | 1.25 |
| Press pressure ($kN/cm^2$) | 3.1 | 4.0 | 3.2 | 2.0 | 2.4 | 2.5 |
| Springback amount (%) | 33.7 | 34.1 | 32.7 | 18.3 | 7.2 | 27.3 |
| Peak intensity ratio of rhombohedral structure (Rhombohedral crystal/ hexagonal crystal) | Not observed | Not observed | Not observed | 0.18 | 0.28 | Not observed |
| Degree of graphitization | 95.5 | 95.5 | 96.7 | 98.5 | 99.8 | 96.4 |
| $d_{002}$ | 3.358 | 3.358 | 3.357 | 3.355 | 3.354 | 3.357 |
| R value | 0.06 | 0.07 | 0.05 | 0.07 | 0.18 | 0.03 |
| High-temperature storage retention rate (%) | 86 | 84 | 89 | 70 | 38 | 86 |
| High-temperature storage recovery rate (%) | 88 | 85 | 90 | 75 | 42 | 88 |
| Liquid permeation property (sec.) | 50 | 55 | 70 | 530 | 620 | 130 |
| Rapid charge capacity retention rate | 85 | 81 | 83 | 68 | 59 | 76 |

As shown in Table 1, when the negative electrode materials produced in Examples 1 to 3 were used, the liquid permeation property of the negative electrode and the high-temperature resistance of the lithium-ion secondary battery were improved. Further, when the negative electrode materials produced in Examples 1 to 3 were used, the rapid charge capacity retention rate was also improved.

All documents, patent applications, and technical standards described in the present disclosure are herein incorporated by reference to the same extent as if each individual document, patent application, or technical standard was specifically and individually indicated to be incorporated by reference.

## Claims

1. A negative electrode material for a lithium-ion secondary battery, the negative electrode material comprising composite particles, each of the composite particles having a structure in which a plurality of flat graphite particles are stacked, wherein the composite particles have a particle size distribution D90/D10 of from 2.0 to 5.0.

2. A negative electrode material for a lithium-ion secondary battery, the negative electrode material comprising composite particles, each of the composite particles having a structure in which a plurality of flat graphite particles are stacked, wherein the plurality of flat graphite particles have a particle size distribution D90/D10 of from 2.0 to 4.4.

3. The negative electrode material for a lithium-ion secondary battery according to claim 2, wherein the composite particles have a particle size distribution D90/D10 of from 2.0 to 5.0.

4. The negative electrode material for a lithium-ion secondary battery according to any one of claims 1 to 3, wherein the composite particles have a specific surface area of from 0.5 m$^2$/g to 2.8 m$^2$/g as measured by nitrogen adsorption measurement at 77 K.

5. The negative electrode material for a lithium-ion secondary battery according to any one of claims 1 to 4, wherein the composite particles have a degree of graphitization of from 93.0% to 98.0% as measured by an X-ray diffraction method.

6. The negative electrode material for a lithium-ion secondary battery according to any one of claims 1 to 5, wherein the graphite particles have a ratio of peak intensities (P1/P2) of a diffraction peak (P1) of a (101) plane of a rhombohedral structure to a diffraction peak (P2) of a (101) plane of a hexagonal structure in an X-ray diffraction pattern by a CuKa ray, of 0.15 or less.

7. The negative electrode material for a lithium-ion secondary battery according to any one of claims 1 to 6, wherein:

   low-crystalline carbon is disposed on at least a part of a surface of the composite particles, and
   the composite particles at which low-crystalline carbon is disposed have an R value of 0.50 or less as measured by Raman spectroscopy.

8. The negative electrode material for a lithium-ion secondary battery according to any one of claims 1 to 6, wherein:

   low-crystalline carbon is not disposed on a surface of the composite particles, and
   the composite particles at which low-crystalline carbon is not disposed have an R value of 0.20 or less as measured by Raman spectroscopy.

9. The negative electrode material for a lithium-ion secondary battery according to any one of claims 1 to 8, wherein an oil absorption of the composite particles is from 15 mL/100g to 45 mL/100g.

10. The negative electrode material for a lithium-ion secondary battery according to any one of claims 1 to 9, wherein the composite particles have a springback amount of 40% or more, the springback amount being obtained by compressing the composite particles until the composite particles have a density of 1.8 g/cm$^3$, releasing pressure therefrom, and dividing, by the density of 1.8 g/cm$^3$, an absolute value of a difference between the density of 1.8 g/cm$^3$ and a density of the composite particles after releasing the pressure.

11. A negative electrode for a lithium-ion secondary battery, the negative electrode comprising:

   a negative electrode material layer comprising the negative electrode material for a lithium-ion secondary battery according to any one of claims 1 to 10; and
   a current collector.

12. A lithium-ion secondary battery, comprising:

   the negative electrode for a lithium-ion secondary battery according to claim 11;
   a positive electrode; and
   an electrolytic solution.

13. A method of producing a negative electrode material for a lithium-ion secondary battery, the method comprising:

   classifying a plurality of flat graphitizable aggregates and removing at least one selected from the group consisting of fine particles and coarse particles;
   mixing a classified plurality of flat graphitizable aggregates with a binder to obtain a mixture;
   processing the mixture to produce secondary particles, each of the secondary particles having a structure in which the plurality of flat graphitizable aggregates are stacked;
graphitizing the secondary particles to obtain composite particles, each of the composite particles having a structure in which a plurality of flat graphite particles are stacked; and
classifying the composite particles and removing at least one selected from the group consisting of fine particles and coarse particles.

14. The method of producing a negative electrode material for a lithium-ion secondary battery according to claim 13, wherein the negative electrode material for a lithium-ion secondary battery is the negative electrode material for a lithium-ion secondary battery according to any one of claims 1 to 10.

15. The method of producing a negative electrode material for a lithium-ion secondary battery according to claim 13 or 14, wherein the flat graphitizable aggregates have a particle size distribution D90/D10 of from 2.0 to 4.4.

16. The method of producing a negative electrode material for a lithium-ion secondary battery according to any one of claims 13 to 15, wherein the secondary particles to be subjected to graphitization have a bulk density of from 0.4 $g/cm^3$ to 1.0 $g/cm^3$.

17. The method of producing a negative electrode material for a lithium-ion secondary battery according to any one of claims 13 to 16, wherein the processing of the mixture comprises heating the mixture to volatilize a volatile component of the binder.

18. The method of producing a negative electrode material for a lithium-ion secondary battery according to claim 17, wherein the heating comprises depressurizing an atmosphere.

# FIG. 1A

# FIG. 1B

FIG. 2A

FIG. 2B

# FIG. 3A

# FIG. 3B

# FIG. 4A

# FIG. 4B

## INTERNATIONAL SEARCH REPORT

| International application No. |
| --- |
| PCT/JP2020/003463 |

**A. CLASSIFICATION OF SUBJECT MATTER**
H01M 4/36(2006.01)i; H01M 4/587(2010.01)i; H01M 10/052(2010.01)i
FI: H01M4/587; H01M4/36 A; H01M10/052
According to International Patent Classification (IPC) or to both national classification and IPC

**B. FIELDS SEARCHED**

Minimum documentation searched (classification system followed by classification symbols)
H01M4/00-4/62; H01M10/052

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-67680 A (MITSUBISHI CHEMICAL CORP.) 17.04.2014 (2014-04-17) paragraphs [0179]-[0183], [0185]-[0192], [0194]-[0195], [0220]-[0227], example 2, table 1 | 1, 4-5, 7-9, 11-12 |
| A | | 2-3, 6, 13-18 |
| X | JP 2010-251315 A (MITSUBISHI CHEMICAL CORP.) 04.11.2010 (2010-11-04) paragraphs [0013]-[0014], [0028], [0054], [0104]-[0113], example 1, table 1 | 1, 5, 7, 9, 11-12 |
| A | | 2-4, 6, 8, 13-18 |
| X | JP 2003-168432 A (HITACHI POWDERED METALS CO., LTD.) 13.06.2003 (2003-06-13) paragraphs [0004]-[0005], [0015], table 1 | 1, 4-5, 7, 9, 11-12 |
| A | | 2-3, 6, 8, 13-18 |
| A | JP 2016-136517 A (MITSUBISHI CHEMICAL CORP.) 28.07.2016 (2016-07-28) paragraphs [0020], [0024]-[0025], examples 1-3, table 1 | 1-9, 11-18 |

☐ Further documents are listed in the continuation of Box C.　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 March 2020 (23.03.2020) | 07 April 2020 (07.04.2020) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

EP 4 099 442 A1

**INTERNATIONAL SEARCH REPORT**

International application No.

PCT/JP2020/003463

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 10
   because they relate to parts of the international application that do not comply with the prescribed requirements to such an extent that no meaningful international search can be carried out, specifically:
   See extra sheet

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

---

Form PCT/ISA/210 (continuation of first sheet (2)) (January 2015)

31

| INTERNATIONAL SEARCH REPORT | | International application No. |
|---|---|---|
| Information on patent family members | | PCT/JP2020/003463 |

| Patent Documents referred in the Report | Publication Date | Patent Family | Publication Date |
|---|---|---|---|
| JP 2014-67680 A | 17 Apr. 2014 | (Family: none) | |
| JP 2010-251315 A | 04 Nov. 2010 | US 2012/0052393 A1 paragraphs [0014]-[0015], [0047], [0074], [0125]-[0134], example 1, table 1 EP 2413403 A1 CN 102362381 A KR 10-2012-0022731 A | |
| JP 2003-168432 A | 13 Jun.2003 | (Family: none) | |
| JP 2016-136517 A | 28 Jul. 2016 | US 2018/0013146 A1 paragraphs [0131], [0150]-[0151], examples 1-3, table 1 EP 3246974 A1 CN 107112536 A KR 10-2017-0103003 A | |

Form PCT/ISA/210 (patent family annex) (January 2015)

**INTERNATIONAL SEARCH REPORT**

| International application No. |
| --- |
| PCT/JP2020/003463 |

<Continuation of Box No. II>

Claim 10 relates to parts of the international application which does not satisfy predetermined requirements which allow the meaningful international search to be carried out.
That is,

Claim 10 discloses a negative electrode material which is for a lithium secondary battery and has 40% or more of a spring-back, but the detailed description of the invention indicates that if the spring-back amount is 40% or more, a specific composite material has an appropriate elasticity, and the shape thereof easily returns even if pressure is applied when manufacturing the negative electrode (paragraph [0051]), but all the composite materials which are set forth in examples and comparative examples have a spring-back amount of less than 40%.
Therefore, to carry out the invention in claim 10, it is required to decide selecting, pulverizing, and mixing conditions, heat treatment conditions, etc. of a carbon material to be a raw material and for such a decision, trial and errors, or excessive experiments beyond the expectation of a person skilled in the art are required, and thus the detailed description of the invention is not written clearly and fully enough to carry out the invention in claim 10.

Form PCT/ISA/210 (extra sheet) (January 2015)

**EP 4 099 442 A1**

**REFERENCES CITED IN THE DESCRIPTION**

**Patent documents cited in the description**

- WO 2015147012 A

- JP 2005302725 A